# EUROPEAN PATENT APPLICATION

(11) **EP 2 620 798 A1**
(43) Date of publication of application: **31.07.2013**
(21) Application number: 12152469.8
(22) Date of filing: 25.01.2012
(51) Int. Cl.: G02B 27/00, G01C 17/30, H04S 7/00

(54) **Head tracking system**

(71) Applicant: Harman Becker Automotive Systems GmbH, 76307 Karlsbad (DE)
(72) Inventor: Hess, Wolfgang, 76307 Karlsbad (DE); Mayer, Thorsten, 75196 Remchingen (DE); Conzelmann, Philip, 75334 Straubenhardt (DE)
(74) Representative: Bertsch, Florian Oliver

(57) **Abstract**

The invention relates to a head tracking system (2) determining an absolute head position of a user's head (3). The head tracking system comprises a first positioning system (10) and a second positioning system (20). The first positioning system comprises a reference unit (11) being fixedly installed remote from the head (3) and defining a first coordinate system (5). The first positioning system (10) further comprises a positioning unit (20) attached to the head and being configured to communicate with the reference unit (11) to establish position data including indicators indicating a head position in the first coordinate system (5) when the positioning unit is within a field of view (8) of the reference unit (11). The second positioning system (20) comprises a digital compass (21) attached to the head (3) and being configured to establish second position data including indicators indicating a head position in a second coordinate system (6). The head tracking system further comprises a head position determining module configured to determine the absolute head position based on at least one of the first position data and the second position data.

## Description

The present application relates to a head tracking system determining an absolute head position of a user and a method of determining the absolute head position.

### Related Art

Head tracking systems are known which determine the position of the head, e.g. via detecting different types of movements of the head. By way of example, a gyroscope is used to detect a turning of the head around the longitudinal axis of the head, i.e. in horizontal plane of the head. With such a gyroscope an angular acceleration is detected.

EP 2 012 170 A1 discloses a head tracking system in which a position sensitive device (PSD) and a light source, such as an light emitting diode (LED), is used to calibrate a drift occurring in the gyroscope. With the geometrical arrangement used in this patent application, only small head rotations of approximately +/-20° can be detected. The limiting factor is the field of view of the LED with respect to the PSD. Only within a lateral angle of approximately +/- 20°, the light spot generated by the LED falls onto the PSD. With an embodiment as described in EP 2 012 170 A1, it is not possible to determine the head position in a range sufficient to cover usual head movements of a user, e.g., in a vehicle.

Accordingly, a need exists to provide a head tracking system allowing for a head position to be determined in an extended range.

### Summary

This need is met by the independent claims. The dependent claims define embodiments.

According to an aspect, a head tracking system determining an absolute head position of a user's head is provided. The head tracking system comprises a first positioning system and a second positioning system. The first positioning system comprises a reference unit being fixedly installed remote from the head and defining a first coordinate system and a positioning unit attached to the head and being configured to communicate with the reference unit to establish first position data. The first position data includes indicators indicating a head position in the first coordinate system when the position unit is within the field of view of the reference unit. The second positioning system comprises a digital compass attached to the head and being configured to establish second position data including indicators indicating a head position in a second coordinate system. Furthermore, the head tracking system comprises a head position determining module configured to determine the absolute head position based on at least one of the first position data and the second position data.

For example, the absolute head position may be defined in the first coordinate system or may be directly derivable from a position in the first coordinate system. Because the second position data includes indicators indicating the head position in the second coordinate system, it may be necessary to determine the absolute head position in the first coordinate system based on, both, the first position data and the second position data. By doing so, it may be possible to perform a coordinate transformation between the second coordinate system and the first coordinate system such that the second position data include indicators indicating the head position in the first coordinate system.

The absolute head position may specify values indicating an absolute positioning of the head in, e.g., the first coordinate system, such as turning angle, inclination angle, height, lateral position, etc. However, not all of this information needs to be determined as the absolute head position by the head tracking system; it may be sufficient to determine certain parameters such as, e.g., the turning and inclination angle.

The digital compass may determine the head position with respect to the earth magnetic field. Therefore, the digital compass may be configured to determine an orientation of the head with respect to an orientation of the earth magnetic field based on elements selected from the group consisting of: magnetometers, global positioning system, magneto-resistance. Different types of digital compasses are known to the person skilled in the art and therefore need not to be discussed in this context.

Because the second positioning system comprises a digital compass being configured to establish the second position data, it may be possible to reduce the efforts necessary to tune the system compared to conventional system relying on, for example, inertial measurement units. Typically, such inertial measurement units are complex to handle and comparably costly. A digital compass may significantly reduce the complexity of the system and furthermore may be available at comparably low costs. An inertial measurement unit comprises a number of sensors, for example a 3D gyroscope, a 3D accelerometer, and an optical or acoustical sensor for giving an absolute reference. A single digital compass in contrast may be operated in a less complex fashion and may be fail-safe if compared to such an inertial measurement unit.

The reference unit may comprise a light source and the position unit may comprise a position sensitive device. The communication may be light communication. The light emitted by the light source may generate a light spot on the position sensitive device when the head is positioned in the field of view and the positioning unit may be configured to establish the first position data based on the position of the light spot on the position sensitive device.

For example, the light source may be in the form of a light emitting diode (LED). However, different embodiments of the first positioning system are possible. For example, the communication may be acoustical communication. In such a case, the reference unit may be a sound source and the positioning unit may be a plurality of microphones. In any case, because the reference unit is located away from the head in a fixed position, for example in a vehicle, it may be able to define the first coordinate system.

Then, the head position determining module may be configured to determine the absolute head position, when the positioning unit is within the field of view, operating in a first mode based on the first position data. It may be further configured to determine the absolute head position, when the positioning unit is outside the field of view, operating in a second mode based on the first position data and the second position data. Therefore, when first position data is available because the positioning unit is within the field of view of the reference unit, it may be possible to determine the absolute head position directly from the first position data which is already including indicators indicating a head position in the first coordinate system. In particular, there may be no need to involve the second positioning system in such a case.

However, when operating in the second mode, using, both, first position data and second position data may allow performing a coordinate transformation from the second coordinate system to the first coordinate system. This may allow to determine the absolute head position in the first coordinate system.

In particular, when operating in the second mode, the head position determining module may be configured to determine the absolute head position based on a reference first position data established at a first position where the positioning unit is within the field on view and based on a reference second position data established at the first head position and based on a current second position data established at a second position where the positioning unit is outside the field of view.

In such a case, when operating in the second mode, the head position determining module may be configured to match the reference first position data and the reference second position data at the first head position to obtain a coordinate offset quantifying a difference between the indicators included in said reference first and second position data at the first head position. Furthermore, the head position determining module may be configured to coordinate-transform the current second position data at the second head position by subtracting the coordinate offset from the indicators in said current second position data such that the indicators indicate a position in the first coordinate system at the second head position. By performing such a coordinate transformation by determining a transformation function, i.e., the coordinate offset, transforming the indicators included in the second position data into indicators indicating the head position in the first coordinate system, it may become possible to determine the absolute head position in the first coordinate system even when no first position data is currently available.

For example, the coordinate offset, i.e. the transformation function, may be obtained at a first head position which relates to the most recent head position in which the positioning unit was within the field of view and the second head position may relate to the current head position. I.e., the first head position may relate to the position just prior to the head turning such that the positioning unit is outside the field of view. In such a way it may be ensured that the coordinate transformation may use the most up-to-date coordinate offset, i.e. transformation function, which is available.

In situations where the transformation function may change over time, for example because the head tracking system may be part of a vehicle which itself can change its orientation with respect to the second coordinate system, i.e. the magnetic field, it may be possible to reduce the error which results from the uncertainty of the relative orientation between the second and the first coordinate system. By initialising the coordinate offset or transformation function every time, both, first and second position data is available, it may be ensured that the coordinate transformation has a reduced error due to changes in the relative orientation between the first and second coordinate systems.

In particular, when operating in the second mode, the head position determining module may be configured to continuously trace the evolution of the second position data when the head moves between the first head position and the second head position. Then, starting from the first head position, where, both, first and second position data is available, the incremental changes of the second position data may be related to the last and most recent available first position data in order to perform a coordinate transformation of the indicators included in the second position data. This may have the effect of a simple calculation of the absolute head position when, e.g., the incremental changes of the indicators included in the second position data have the same value in both, the first and the second coordinate systems.

The second positioning system may further comprise a three-dimensional accelerometer which is configured to measure orientation of gravitational force and a processor. The processor may be configured to determine an absolute orientation of a sensitive plane of the digital compass with respect to the gravitational force and to include that absolute orientation within the second position datausing respective indicators. By doing so, it may be possible to furthermore determine a lateral inclination angle of the head, i.e., if the sensitive plane of the digital compass has a defined orientation with respect to the head inclination. Such information may also be used to more accurately determine the absolute head position. The first positioning system may be configured to inherently provide the corresponding information, i.e. a lateral inclination angle, in the first position data. For example, when using a PSD in combination with a light source, the position sensitive device may be configured to inherently provide the lateral inclination angle of the head based on a, e.g., vertical position of the light spot on the position sensitive device. Including the inclination angle into the determined absolute head position when using the absolute head position for the calculation of a virtual surround sound may have the effect of a more accurate sound effect.

In particular, the indicators included in the first position data may relate to at least a lateral turning angle of the head with respect to the reference unit and the indicators included in the second position data may relate to at least a lateral turning angle of the head with respect to a magnetic north direction. In this sense, the lateral turning angle that may be included in the indicators included in the first position data may relate to the lateral turning angle as defined in the first coordinate system. Of course, the first coordinate system does not need to be aligned with the reference unit - head orientation but may be, e.g., offset. In such a case, the absolute head position is defined in a coordinate system directly derivable from the first coordinate system. Likewise, the lateral turning angle as may be included in the indicators included in the second position data may relate to the lateral turning angle as defined in the second coordinate system. The absolute head position therefore may be characterised to some degree by the lateral turning angles. This may have the effect that a virtual surround sound that is generated based on the thus specified absolute head position may be particularly accurate. Typically, the virtual surround sound is particularly sensitive on the lateral turning angle. For example, if the first positioning system is arranged with the virtual surround sound orientation, the absolute head position may also be defined directly in the first coordinate system.

In particular, the second positioning system may further comprise a second digital compass being fixedly installed remote from the head, wherein the second digital compass may be configured to determine an offset orientation of the first coordinate system with respect to the second coordinate system. Furthermore, the head position determining module may be configured to determine the absolute head position also based on the offset orientation. By providing a second digital compass, it may be possible to associate a change in indicators included in the second position data with a change in the head position with respect to the vehicle or with a change in the vehicle position with respect to the magnetic north direction, i.e., while the head position remains fixed with respect to the vehicle. In other words: it may be possible to distinguish a head movement from a vehicle movement by provisioning the digital compass attached to the head and the second digital compass remote from the head. It may then be possible to computationally eliminate, for example via subtraction of a vehicle orientation from the indicators included in the second position data, the influence of a moving vehicle.

According to a further aspect, a method of determining an absolute head position of the user's head is provided. The method comprises, when the head position is within a field of view, establishing first position data by means of a first positioning system defining a first coordinate system and having a field of view, wherein the first position data includes indicators indicating a head position in the first coordinate system. The method further comprises establishing second position data by means of a digital compass attached to the head, wherein the second position data includes indicators indicating a head position in a second coordinate system. The method further comprises determining the absolute head position based on at least one of the first position data and the second position data.

For such a method, effects according to the effects achieved with the system of another aspect of the invention may be achieved.

### Brief description of the drawings

The invention will be described in further detail below with reference to the accompanying drawings.
Fig. 1 is a schematic perspective view of a head tracking system.
Fig. 2 is a schematic top view of a head tracking system.
Fig. 3 is a schematic illustration of a head tracking system and its components.
Fig. 4A is a schematic illustration of first position data.
Fig. 4B is a schematic illustration of second position data.
Fig. 5 is shows the temporal evolution of first and second position data.
Fig. 6 is a flowchart illustrating a method of determining an absolute head position.
Fig. 7 is a schematic view explaining the generation of a virtual surround sound using headphones.
Fig. 8 shows audio signals of a left and right channel recorded for the generation of filter elements used to generate the virtual surround sound.

### Detailed description

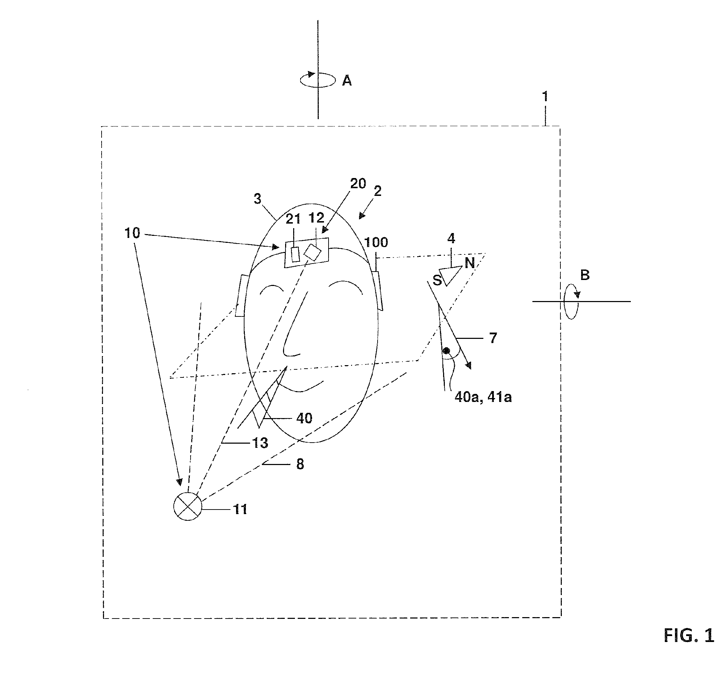

In Fig. 1, a head tracking system 2 is schematically shown. The head tracking system 2 is used to determine an absolute head position of the head 3 of a user. The user and the head tracking system 2 are located inside a vehicle 1.

The absolute head position can be determined using a first positioning system 10. Such a first positioning system 10 comprises a reference unit 11 which is fixedly installed remote from the head 3 and a positioning unit 12 being attached to the head 3. Because the reference unit 11 is not attached to the head 3, it can be used to define a first coordinate system (not shown in Fig. 1) for the head position. The absolute head position can then be defined via, e.g. a first lateral turning angle 40 defining a rotation of the head 3 about the axis labelled A in Fig. 1 away from the direction facing directly at the reference unit 11. Of course, a zero first lateral turning angle can be defined with respect to any other direction, e.g. the head 3 facing a display, e.g., in a center console of the vehicle 1 or in the backrest of a driver's seat. Another value that quantifies the absolute head position is a first lateral inclination angle 40a which defines an inclination of a reference plane defined by the head 3 (indicated in Fig. 1 by the plane circumferred by the dashed-dotted line) with respect to a downward direction. For example, the downward direction may be defined as the direction given by the gravitational force 7. This lateral inclination angle 40a corresponds to a rotation of the head 3 about the rotational axis labelled B in Fig. 1.

It should be understood that when the first coordinate system (not shown in Fig. 1) is defined via the reference unit 11, it corresponds to a local coordinate system defining a position of the head for example in the environment of the vehicle 1 because the reference unit is mounted in the vehicle 1. This is in contrast to different kinds of coordinate systems which rely on global references such as the magnetic field 4 of the earth. Then, if the vehicle 1 changes its orientation with respect to the magnetic field 4, the orientation of the head 3 with respect to the local first coordinate system can still remain the same while it changes its orientation in the global coordinate system.

In the head tracking system 2 of Fig. 1, the reference unit 11 is in the form of one or more light sources emitting light to the positioning unit 12 in the form of a position sensitive device (PSD) positioned centrally on headphones 20 worn by the user. The light source 11 can be a light emitting diode (LED) emitting light in a predetermined frequency range, e.g. infrared light in a pulsed way. Therefore, the first positioning system 10 comprising the LED 11 and the PSD 12 relies on light communication 13 indicated in Fig. 1. The infrared frequency range may be used in order not to disturb the user wearing headphones 100. The light emitted by the LED 11 generates a light spot on the position sensitive device 12. This position of the light spot on the position sensitive device 12 is used to, first, establish a head position in the first coordinate system, and then, secondly, to determine the absolute head position in the first coordinate system. Via the position of the light spot on the PSD, the lateral turning angle 40 and the inclination angle 40a can be determined in a manner known to the skilled person. Therefore, the combination of the LED 11 and the PSD 12 resembles the first positioning system 10, because it is possible to determine a head position from the interplay of these two units.

In general, different embodiments for the reference unit 11 and the positioning unit 12 are possible, e.g. based on acoustical communication. In such an embodiment, the reference unit 11 could be a loudspeaker emitting the acoustical signals. The positioning unit 12 in such an embodiment could be one or more microphones detecting the acoustical signals emitted by reference unit 11. As can be seen, the combination of the reference unit 11 and the positioning unit 12 is not limited to a LED 11 and a PSD 12, but comprises different possible embodiments. However, in the course of the application, the reference unit is associated with light emitting diode 11 and the positioning unit is associated with the position sensitive device 12 in a non limiting way.

The LED 11 is arranged at a fixed location and transmits the light in the direction of the user wearing the headphones 100 as set forth above. In the embodiment of Fig. 1, the LED 11 has a field of view 8 with respect to the positive sensitive device 12 which has an opening angle of approximately ± 20° to ± 40°. The exact size of the field of view 8 depends on the design of the first positioning system 10, in particular of the PSD 12. Within this field of view 8, it is possible to determine the absolute head position in the first coordinate system using the LED 11 and the PSD 12.

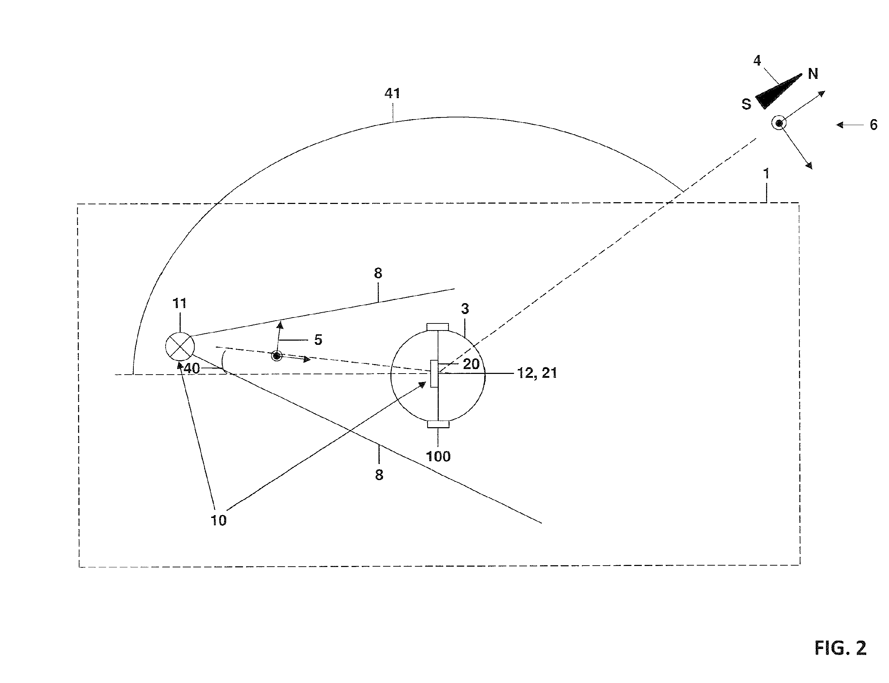

In order to determine the absolute head position outside the field of view 8, in Fig. 1, a second positioning system 20 is provided attached to the head 3. The second positioning system 20 comprises a digital compass 21. The digital compass 21 can detect a second lateral turning angle (not shown in Fig. 1, but will be discussed with respect to Fig. 2 below) indicating a turning of the head about the axis A with respect to the orientation of the magnetic field 4. Typically, the magnetic field 4 present at the location of the second positioning system 20 corresponds to the magnetic field of the earth. This shall be assumed in the following.

When the head 3 is in a position such that the PSD 12 is outside the field of view of the LED 11, the first position system 10 cannot be used to determine the current absolute head position. Therefore, in such a situation it is possible to rely on the second positioning system 20 comprising the digital compass 21 in order to determine the absolute head position.

In such a system relying on the positioning using a first positioning system and a second positioning system 20, it is necessary to ensure that the coordinate systems in which the absolute head position is determined are the same for the two positioning systems or that coordinate transformation is possible. In the embodiment of Fig. 1, the determining of the absolute head position using the first positioning system 10 is done in a different coordinate system (namely, a first coordinate system defined by the reference unit in the form of the LED 11), then the coordinate system for which the determining is done using the second positioning system 20 (namely, a second coordinate system defined by the orientation of the magnetic field 4).

As will be explained below with reference to the Figs. 2-6, when relying on the second positioning system 20, it becomes necessary to perform a coordinate transformation in order to obtain the absolute head position in the first coordinate system (not shown in Fig. 1).

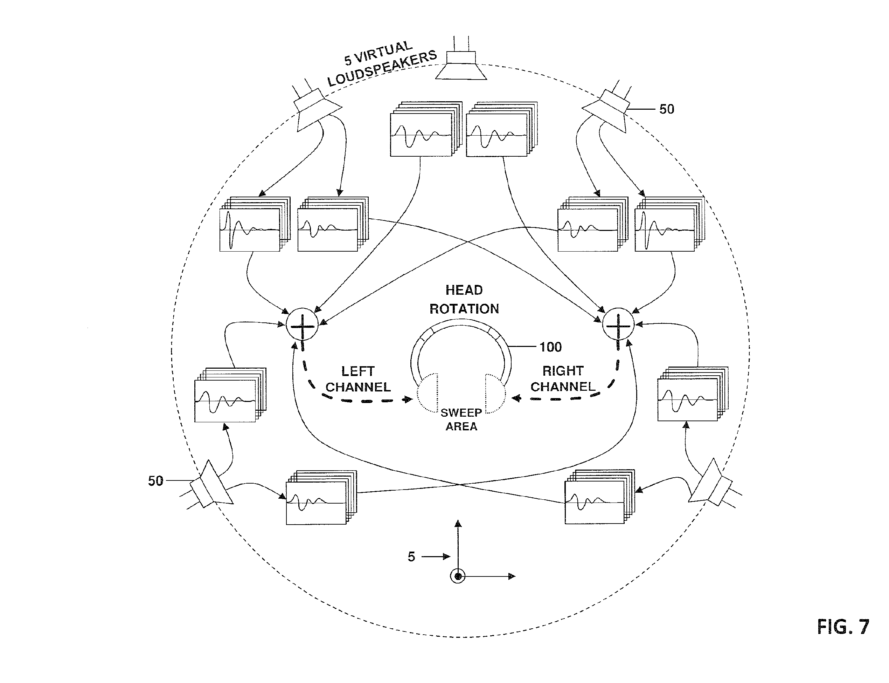

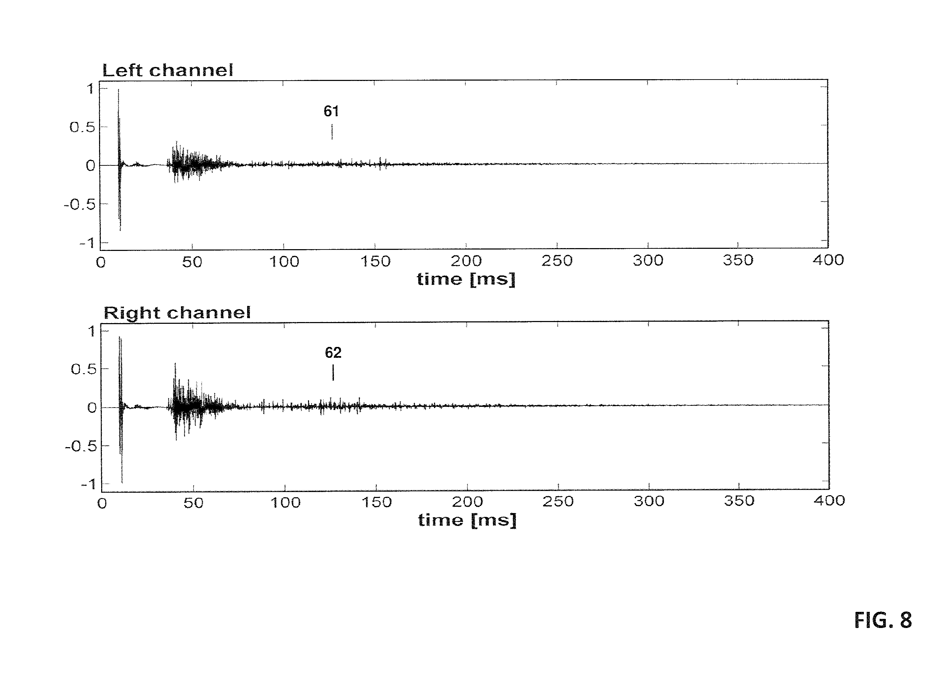

The system shown in Fig. 1 may be part of a rear seat vehicle entertainment system in which a user sitting on the back seat of a vehicle hears music or watches a film, the audio signals of which are consumed using the headphones 100. With the present disclosure it is possible to generate a virtual surround sound for the user wearing the headphones as will be explained with reference to Figs. 7 and 8 hereinafter.

First, with respect to Fig. 2, it will be explained in greater detail how the absolute head position is determined using the first positioning system 10 and/or the second positioning system 20.

In Fig. 2, a situation similar to the situation illustrated by Fig. 1 is shown. Fig. 2 is a top view of the situation of Fig. 1. As can be seen from Fig. 2, the absolute head position is such that the PSD 12 is within the field of view 8 of the LED 11. The LED 11, which is fixedly installed within the vehicle 1, defines a first coordinate system 5.

The first coordinate system 5 in Fig. 2 is illustrated using a Cartesian coordinate system, however, it is clear that different coordinate systems such as spherical or cylindrical coordinate systems may be better suited to determine the absolute head position. The Cartesian coordinate system in Fig. 2 is used merely for illustrative purposes. In particular, in the first coordinate system 5, a first lateral turning angle 40 determining the absolute head position is defined and illustrated in Fig. 2. The first lateral turning angle 40 corresponds to the angle enclosed by the straight connection between the LED 11 and the PSD 12 and the direction of sight of the head 3. It should be noted that the direction of sight corresponds to a normal to an auditory plane defined by the user's hearing system. Therefore, the first lateral turning angle 40 directly correlates with the auditory system. This becomes important when the absolute head position as determined by the head tracking system is used to generate a virtual surround sound as will be explained later with reference to Figs. 7 and 8.

As long as the absolute head position is such that the position sensitive device 12 is within the field of view 8 of the LED 11, the first positioning system 10 can be used to determine the absolute head position via first position data. For example, a further unit, a head position determining module (not shown in Fig. 2) can use the first position data established by the first positioning system to determine the absolute head position.

However, in a situation where the absolute head position is such that the PSD 12 is outside the field of view 8 of the LED 11, it is not possible anymore to establish first position data by the first positioning system 10. Then it is possible to determine the absolute head position via the head position determining module using second position data established by the second positioning system 20. The second positioning system 20 comprises a digital compass 21 which can determine a second lateral turning angle 41 with respect to, e.g., a magnetic north direction of the magnetic field 4. In other words, the head position as determined by the second positioning system 20 and as indicated by indicators included in the second position data relates to a head position within a second coordinate system 6. The second coordinate system 6 is defined with respect to the orientation of the magnetic field 4. Because a magnetic field 4 is a global reference, it is graphically indicated in Fig. 2 outside the vehicle 1 again using a Cartesian representation in a non-limiting manner. To obtain the absolute head position in the first coordinate system 5, a coordinate transformation of indicators indicating the head position in the second coordinate system 6 into indicators indicating the head position in the first coordinate system 5 is performed.

For example, the transformation function for coordinate transformation from the second coordinate system 6 to the first coordinate system 5 can be obtained at a point in time or a head position where the PSD 12 is still within the field of view 8 of the LED 11. At such a head position, both, first position data including indicators indicating the head position in the first coordinate system 5, as well as second position data including indicators indicating the head position in the second coordinate system 6 are available. Using the first and the second position data corresponding to the same head position, it is possible to obtain the required transformation function. The required function can be, e.g, a coordinate offset quantifying a difference between the indicators included respectively in the first and second position data. In further detail it can be an offset between the first and second lateral turning angles 40, 41. Then, when the head 3 turns such that that PSD 12 is not any more within the field of view 8 of the LED 11, the previously calculated transforming function can be used to coordinate-transform the indicators included in the second position data from the second coordinate system 6 to the first coordinate system 5.

The transformation function maintains its validity only as long as the orientation between the global second coordinate system 6 and the local first coordinate system 5 remains the same. In other words: If the vehicle 1 turns, the transformation function loses its validity and an error is introduced when performing the coordinate transformation. However, typically the time during which the head 3 is in a position such that it is outside the field of view 8 is comparably short. This is because typical field of views 8 can be up to ± 40° in size. If the reference unit 11 in the form of the LED is accordingly positioned, the dynamic range of the head 3 amounts to almost ± 40° as well. However, head rotations amounting to more than ± 40° in the lateral plane are very seldom. Also, such excessive head rotations of more than ± 40° are typically not maintained for a long period of time. In particular, the period of time may be shorter than the typical time scale during which the vehicle 1 remains aligned with respect to a certain global direction, i.e., magnetic field direction. Errors in determining the absolute head position can therefore be reduced.

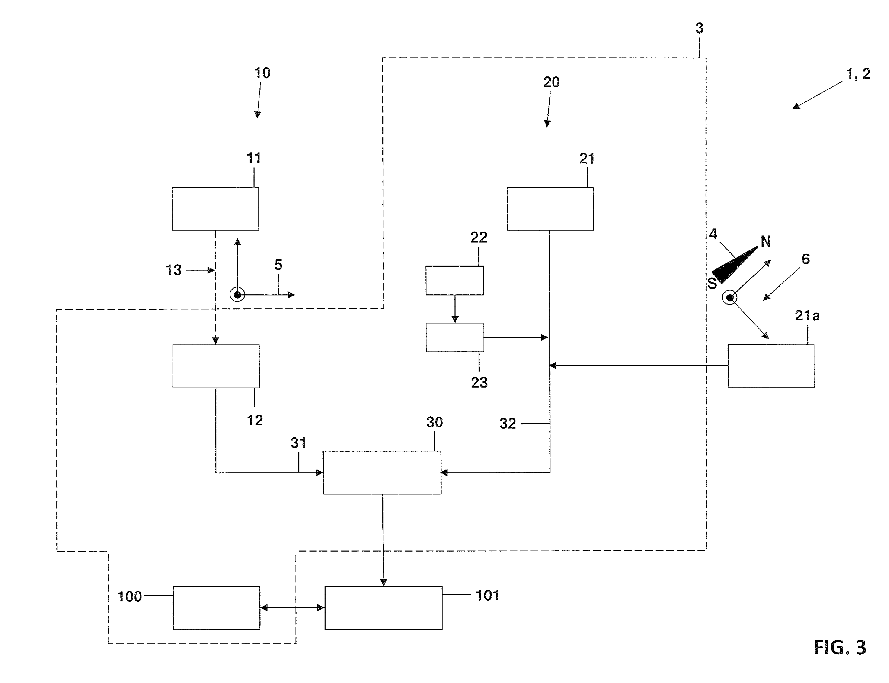

The different units being part of the head tracking system 2 and the vehicle 1 will be explained in greater detail with respect to the schematic illustration of Fig. 3. In Fig. 3, the first positioning system 10 comprising the reference unit in the form of the LED 11 and the positioning unit in the form of the position sensitive device 12 is illustrated. The two units 11, 12 communicate via light communication 13. The first positioning system 10 establishes first position data 31 including indicators indicating a head position in the first coordinate system 5. The head position can comprise a lateral turning angle and an inclination angle as set forth with respect to Figs. 1 and 2. The first coordinate system 5 is a local coordinate system defined via the reference unit/LED 11. The first position data 31 is output from the PSD 12 and input into a head position determining module 30. If the PSD 12 is within the field of view of the LED 11, the head position determining module 30 can determine the absolute head position relying on the first position data 31. The absolute head position may be output to, e.g., a surround sound system 101 which uses the information of the absolute head position in order to create a virtual surround sound for the user wearing headphones 100.

However, in a situation where the PSD 12 is outside the field of view of the LED 11, current first position data 31 cannot be established by the first positioning system 10. Therefore, the second positioning system 20 is provisioned. The second positioning system 20 comprises the digital compass 21. The digital compass 21 establishes second position data 32 including indicators indicating a head position in the global second coordinate system 6 and outputs the second position data 32 to the head position determining unit 30. The second coordinate system 6 is defined, e.g., via the magnetic north direction of the magnetic field 4.

The second positioning system 20 can comprise optional components. Such optional components are, firstly, an accelerometer 22 and a processor 23. These units 22, 23 can be used in order to determine an inclination angle of the head with respect to the orientation of the gravitational force. Such information can be included in the second position data in order to more accurately determine the absolute head position in the head position determining module 30. Namely, if also the inclination angle of the head is known, the surround sound quality as created via the surround sound system 101 may be improved. However, it is not necessary to provision units 22, 23, because typically the lateral inclination angle of the head does not change quickly and therefore it can be assumed to be constant over the time period where the head position determining modules 30 relies on second position data 32 for determining the absolute head position. Another reason why units 22, 23 are optional units is that typically for the generation of surround sound it is not mandatory to have the information of the lateral inclination angle at all. This is because the time difference of the audio signal as perceived by the two ears of a user mainly depends on the lateral turning angle and not so much on the lateral inclination angle. Therefore, the quality of the surround sound as experienced by the user wearing headphones 100 does not depend as strongly on the lateral inclination angle as it depends on the lateral turning angle.

Secondly, another optional unit contained in the second positioning system 20, is a second digital compass 21a located remote from the head 3. For example, the second digital compass 21a may be part of a navigation unit (not shown) of the vehicle 1. The digital compass 21a being fixedly installed within the vehicle remote from the head 3 can be used in order to detect any changes in the orientation of the magnetic field 4 due to turns of the vehicle 1. By providing the second digital compass 21a it becomes possible to distinguish between changes in the indicators included in the second position data 32 due to turning of the head 3 and due to turning of the vehicle 1. The signal of the second digital compass 21a does not depend on the lateral turning angle of the head 3. Then, if a turning of a vehicle is sensed via the second digital compass 21a, it becomes possible to computationally eliminate this undesired contribution from the second position data 32. In detail: if the digital compass 21 includes indicators indicating a change in the position and the second digital compass 21a includes indicators indicating no change in the position, it can be concluded that the head is turned. To the contrary, if both digital compasses 21, 21a include indicators indicating a certain change in position, the vehicle turns. Such an indicated change in position can then be computationally eliminated from the second position data 32 and considered by the head position determining module 30 when determining the absolute head position. Of course, also superposition of a turning vehicle 1 and a turning head 3 can be eliminated accordingly.

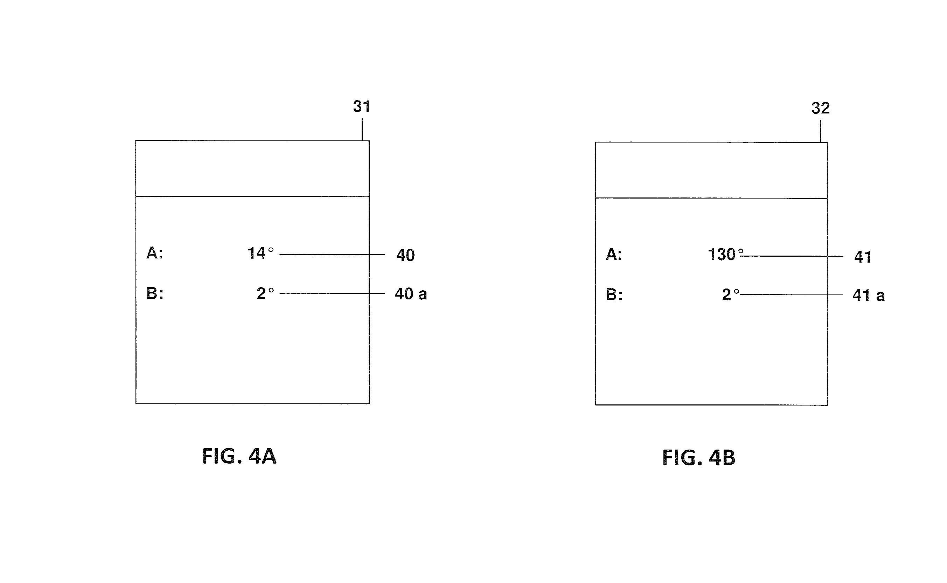

Figs. 4A and 4B illustrate the first and second position data 31, 32, respectively. In Fig. 4A, the first position data 31 is illustrated schematically. The first position data 31 can comprise, for example, the first lateral turning angle 40 defined in the first coordinate system with respect to Fig. 2. Furthermore, the first position data 31 can comprise information on the first lateral inclination angle 40a as defined with respect to Fig. 2.

Fig. 4B schematically illustrates the second position data 32, also comprising a lateral turning angle in the form of the second lateral turning angle 41 defined in the second coordinate system as defined with respect to Fig. 2. Also, the second position data 32 includes the second lateral inclination angle 41a.

As can be seen from Figs. 4A and 4B, the first and second lateral inclination angles 40a, 41a can have the same value within the first and second coordinate system. This is because both coordinate systems can be defined with respect to the orientation of the gravitational force, i.e. a vertical downward direction. However, the first and second lateral turning angles 40, 41 can have different values in the first and second coordinate systems. This has been discussed with respect to Figs. 1 to 3. Of course, under certain situations, it is also possible that the indicators indicating the lateral turning angles 40, 41 have the same numerical values.

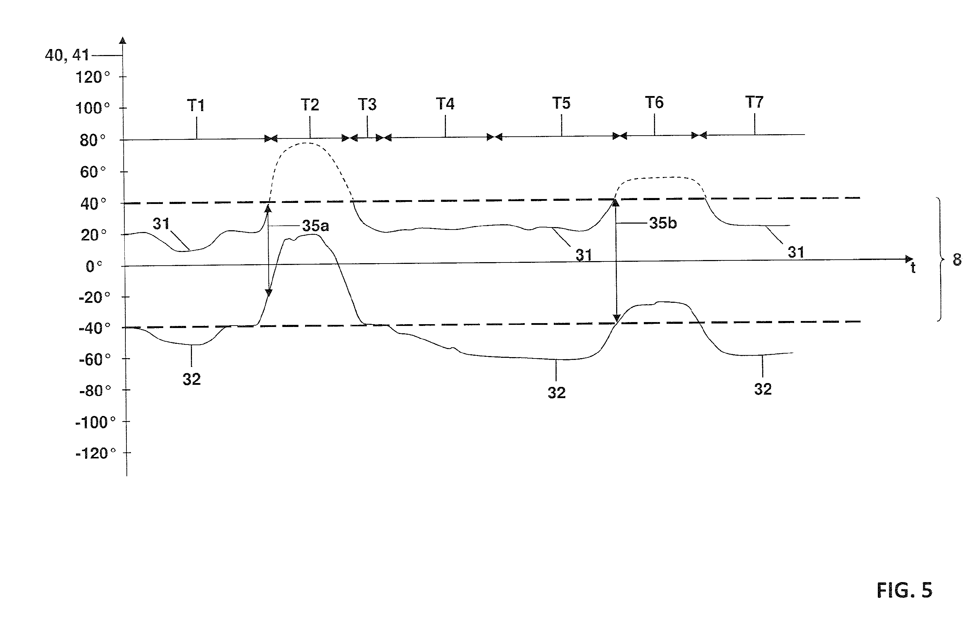

With respect to Fig. 5, it will be explained in further detail how the determining of the absolute head position can occur over the course of time. For this, in Fig. 5 the first lateral turning angle 40 as indicated by indicators included in the first position data 31, as well as the second lateral turning angle 41 as indicated by indicators included in second position data 32 is plotted as a function of time. In Fig. 5, the first position data 31 is directly related to the absolute head position.

First, within the time interval labelled T1 in Fig. 5, the head moves such that the numerical value of the indicator indicating the first lateral turning angle 40 remains within the field of view 8 which has an opening angle of ± 40° as indicated by the horizontal dashed lines in Fig. 5. The numerical values of the indicators indicating the second lateral turning angle 41, i.e. in the second coordinate system, are merely offset from the numerical values of the first position data 31. This corresponds to the vertical offsets of the lines indicating the first position data 31 and the second position data 32. In particular, incremental changes in the lateral turning angle 40, 41 have the same values in, both, the first and the second coordinate system.

At the end of the time interval T1, a situation occurs where the head position is such that the positioning unit, i.e. the PSD 12 of Fig. 2, is just moving out of the field of view 8 of the reference unit, i.e. the LED 11 of Fig. 2. In other words, the first lateral turning angle 40 becomes larger than 40°. During the time interval labelled T2, the first lateral turning angle 40 is remains larger than 40°. In this time interval T2, no first position data 31 is available, because the first positioning system cannot establish the head position. Therefore, during the time interval T2, the corresponding curve of the first position data 31 is indicated by a dotted line. During the time interval T2, the head position determining module relies on the second position data 32 in order to determine the absolute head position in the first coordinate system. In other words, the head position determining modules determines the first lateral turning angle 40 indicated by the dotted line based on the second lateral turning angle 41 during the time interval T2.

This is achieved in the following way: At the end of the time interval T1, the coordinate offset 35a between the first lateral turning angle 40 and the second lateral turning angle 41 amounts to approximately +60° as indicated by the vertical arrow. This coordinate offset 35a can be determined, e.g., as the offset between reference first and second position data, and then be used during the time interval T2 by adding it to the current second lateral turning angle 41 in order to calculate the first lateral turning angle 40. This corresponds to a coordinate transformation of the indicators included in the second position data 32 defined in the second coordinate system into indicators defined in the first coordinate system.

A similar situation is present during time interval T6. However, for the coordinate transformation during time interval T6, the coordinate offset 35b determined at the end of time interval T5 is used because it is more recent, i.e., more up-to-date, than the coordinate offset 35a determined at the end of time interval T1. The most recent coordinate offset typically is obtained at the time where the head moved such that the PSD just left the field of view of the LED. In Fig. 5, these points in time correspond to the end of time intervals T1 and T5.

As can be seen from Fig. 5, the coordinate offset 35b amounts to approximately 80°, while the coordinate offset 35a amounts to only 60°. This difference of 20° in the coordinate offsets 35a and 35b is due to a turning of the vehicle during the time interval labelled T4 while the head position remained constant. As can be seen from Fig. 5, during the time interval T4, the value of the first lateral turning angle 40 stays approximately constant at roughly + 30°, while the value of the second lateral turning angle 41 changes during the time interval T4 from -40° to -60°. Due to this, a change in the coordinate offsets 35a, 35b between the end of time intervals T1 and T5 is observed. Last, it is noted that the time periods during which the head rotation is such that the positioning unit is outside the field of view, i.e. the duration of time intervals T2 and T6, is much shorter than the time periods of the head positioning inside the field of view, i.e., T1, T3, T4, T5, and T7.

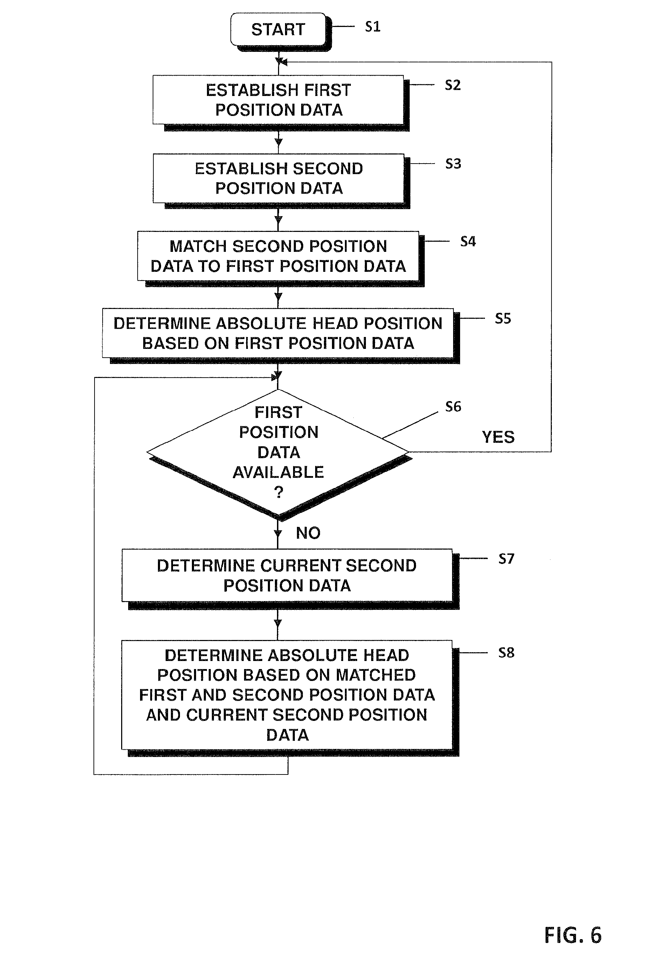

With reference to Fig. 6, a method of determining the absolute head position is discussed. The method starts with step S1. In step S2, the first position data is established, e.g. via means of a first positioning system. The first positioning system can comprise a reference unit which is fixedly installed remote from the head and therefore can define a first coordinate system. The first positioning system can further comprise a positioning unit which is attached to the head and which can be used to determine the head position in the first coordinate system.

Next, in step S3, second position data is established. The second position data relates to a head position in a second coordinate system. The second position data is established by means of a digital compass which determines the orientation of the head with respect to the magnetic field orientation. In such a case, the second coordinate system is a global coordinate system because the second position data can also depend on the orientation of the reference frame, e.g., of the orientation of vehicle in which the head tracking system is used.

In step S4, the second position data is matched to the first position data. This means, a transformation function for coordinate-transforming indicators included in the second position data indicating a head position in the second coordinate system into indicators indicating the head position in the first coordinate system is calculated. For example, this can relate to calculating an offset angle between lateral turning angles indicated by indicators included in the first and second position data.

In step S5, the absolute head position is determined based on the first position data. The first position data is established via the first positioning system at a high accuracy and directly in the first coordinate system in step S2. Therefore, this information can be directly used in order to determine the absolute head position in the first coordinate system.

In step S6, it is checked whether new first position data is available. There can be a situation where the first positioning system is not able to establish first position data, for example because the positioning unit has moved out of the field of view of the reference unit. If such a situation occurs, in step S7 current second position data is determined. In step S8, this current second position data together with the matched first and second position data of step S5, i.e. the transformation function for the coordinate transformation from the second coordinate system to the first coordinate system, is used in order to determine the absolute head position in the first coordinate system. For example, the coordinate offset determined in step S4 can be used in order to perform the coordinate transformation such that the indicators included in the second position data indicate the position in the first coordinate system. Then it is possible to determine the absolute head position in step S8 in the first coordinate system.

Execution of steps S7 and S8 is only necessary if no first position data is available in step S6. Otherwise, it is possible to perform steps S2 to S5 to, firstly, determine the absolute head position, and, secondly, match the updated second position data to first position data in order to obtain an updated transformation function. It should be understood that during step S8, i.e. when determining the absolute head position based on current second position data because no current first position data is available, the most recent matched second position data and first position data is used. The method ends whenever no determining of the absolute head position is necessary anymore.

Determination of the absolute head position may be used for the generation of a virtual surround sound. In a virtual surround sound using headphones a listening impression is generated as if the user used a 5.1 or 7.1 loudspeaker sound system as shown in Fig. 7 showing a system of 5 loudspeakers 50. The virtual surround sound field gives the impression as if the sound source is stable localized in the virtual room defined via the first coordinate system 5. This phenomena, known as acoustical room-constancy, allows the user using headphones to stable determine the direction from where the sound is coming. Also the user experiences an interactive listening process with the system when turning the head, corresponding to the real-world situation, since it is possible to localize the sound source stable outside of the head with correct front/back position. For example, the virtual surround sound may relate to a video source. Then, the first coordinate system 5 should be aligned based on the location of the video source with respect to the head. In case the first positioning system is aligned accordingly, the first coordinate system relates directly to the absolute head position. Otherwise, the absolute head position is directly derivable from the head position in the first coordinate system.

Perfect externalized, realistic localization becomes possible listening through standard headphones 100. This is only caused by tracking the position of the head and by determining a filter for the determined head position which are used for a low-latency blockwise convolution of the sound signal with the filter in real time.

These filter elements can be generated in the following way using a dummy head with microphones in each ear the binaural room impulse responses are measured. To this end the dummy head placed on a manikin or a stand is positioned in the location, e.g. in the vehicle where the system should be used. Different positions of the dummy head, e.g. different rotations / lateral turning angles are used and for each head position the loudspeakers 50 as shown in Fig. 7 output a sound that is detected by the microphones in the dummy head. This may be repeated for different head rotations, e.g. in steps of 1° until, e .g., azimuth / lateral turning angle of +/-45° or larger is measured. In Fig. 8 the impulse response as measured in the two ears of the dummy head for a defined head position are shown, signal 61 showing the impulse response for the left channel/left ear, signal 62 showing the impulse response for the right channel/right ear. The signals shown in Fig. 8 describe the signals output from one of the loudspeakers of Fig. 7 to the left and the right ear of the dummy head. The audio signals are detected for each of the loudspeakers 50 and for the different head positions generating a plurality of impulse responses. Based on the impulse responses, a filter element is determined for each head position. When a stereo sound signal is then filtered using a filter for a determined head position by determining a real-time convolution of the audio signal with the filter element, the virtual surround sound can be obtained in which the user using head phones has the impression as if the audio signals came from a sound system as shown in Fig. 7.

While specific embodiments of the invention are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A head tracking system (2) determining an absolute head position of a user's head (3), comprising:
- a first positioning system (10), comprising
- a reference unit (11) being fixedly installed remote from the head (3) and defining a first coordinate system (5) and
- a positioning unit (12) attached to the head (3) and being configured to communicate with the reference unit (11) to establish first position data (31) including indicators indicating a head position in the first coordinate system (5) when the positioning unit (12) is within a field of view (8) of the reference unit (11),
- a second positioning system (20), comprising
- a digital compass (21) attached to the head (3) and being configured to establish second position data including indicators indicating a head position in a second coordinate system (6), and
- a head position determining module (30) configured to determine the absolute head position based on at least one of the first position data (31) and the second position data (32).

2. The system of claim 1, wherein the reference unit (11) comprises a light source and the positioning unit (12) comprises a position sensitive device and the communication is light communication (13), and
wherein the light emitted by the light source generates a light spot on the position sensitive device when the head (3) is positioned within the field of view (8), and
wherein the positioning unit (12) is configured to establish the first position data (31) based on the position of the light spot on the position sensitive device.

3. The system of any of claims 1 or 2, wherein the head position determining module (30) is configured to
- determine the absolute head position, when the positioning unit (12) is within the field of view (8), operating in a first mode based on the first position data (31), and
- determine the absolute head position, when the positioning unit (12) is outside the field of view (8), operating in a second mode based on the first position data (31) and the second position data (32).

4. The system of claim 3, wherein, when operating in the second mode, the head position determining module (30) is configured to determine the absolute head position based on
- a reference first position data (31) established at a first head position where the positioning unit (12) is within the field of view (8), and based on
- a reference second position data (32) established at the first head position, and based on
- a current second position data (32) established at a second head position where the positioning unit (12) is outside the field of view (8).

5. The system of claim 4, wherein, when operating in the second mode, the head position determining module (30) is configured to
- to match the reference first position data (31) and the reference second position data (32) at the first head position to obtain a coordinate offset (35a, 35b) quantifying a difference between the indicators included in said reference first and second position data (32) at the first head position,
- to coordinate-transform the current second position data (32) at the second head position by subtracting the coordinate offset (35a, 35b) from indicators in said current second position data (32) such that the indicators indicate a position in the first coordinate system (5) at the second head position.

6. The system of any of claim 4 or 5, wherein, when operating in the second mode, the head position determining module (30) is configured to continuously trace an evolution of the second position data (32) when the head (3) moves between the first head position and the second head position.

7. The system of any of claims 4-6, wherein the first head position relates to the most recent head position in which the positioning unit (12) was within the field of view (8) and wherein the second head position relates to the current head position.

8. The system of any of the preceding claims, wherein the second positioning system (20) further comprises
- a three-dimensional accelerometer (22) which is configured to measure orientation of gravitational force (7),
- a processor (23) which is configured
to determine an absolute orientation of a sensitive plane of the digital compass (21) with respect to the gravitational force (7) and
to include said absolute orientation within the second position data (32).

9. The system of any of the preceding claims, wherein the indicators included in the first position data (31) relate to at least a lateral turning angle (40) of the head (3) with respect to the reference unit (11) and the indicators included in the second position data (32) relate to at least a lateral turning angle (41) of the head (3) with respect to a magnetic north direction.

10. The system of any of the preceding claims, wherein the second positioning system (20) further comprises a second digital compass (21a) being fixedly installed remote from the head (3), wherein the second digital compass is (21a) configured to determine an offset orientation of the first coordinate system (5) with respect to the second coordinate system (6), and wherein the head position determining module (30) is configured to determine the absolute head position also based on the offset orientation.

11. A method of determining an absolute head position of a user's head (3), said method comprising:
- when the head position is within a field of view (8), establishing first position data (31) by means of a first positioning system (10) defining a first coordinate system (5) and having the field of view (8),
wherein the first position data (31) includes indicators indicating a head position in the first coordinate system (5),
- establishing second position data (32) by means of a digital compass (21) attached to the head (3), wherein the second position data (32) includes indicators indicating a head position in a second coordinate system (6),
- determining the absolute head position based on at least one of the first position data (31) and the second position data (32).

12. The method of claim 11, wherein the absolute head position is determined in a first mode based on the first position data (31) when the head position is within the field of view (8), and
is determined in a second mode based on the first position data (31) and the second position data (32) when the head position is outside the field of view (8).

13. The method of claim 12, wherein, when determining in the second mode, the absolute head position is determined based on
- a reference first position data (31) established at a first head position when the head position is within the field of view (8) and based on
- a reference second position data (32) established at the first head position and based on
- a current second position data (32) established at a second head position when the head position is outside the field of view (8).

14. The method of any of claims 12 or 13, wherein, when determining in the second mode, the method further comprises:
- continuously tracing an evolution of the second position data (32) when the head (3) moves between the first head position and the second head position.

15. The method of any of claims 12 - 14, wherein, when determining in the second mode, the method further comprises
- matching the reference first position data (31) and the reference second position data (32) at the first head position to obtain a coordinate offset (35a, 35b) quantifying a difference between the indicators included in said reference first and second position data (32) at the first head position, and
- coordinate-transforming the current second position data (32) at the second head position by subtracting the coordinate offset (35a, 35b) from the indicators in said current second position data (32) such that the indicators indicate a position in the first coordinate system (5) at the second head position.
